# EUROPEAN PATENT APPLICATION

(11) **EP 2 984 927 A1**
(43) Date of publication of application: **17.02.2016**
(21) Application number: 15176786.0
(22) Date of filing: 15.07.2015
(51) Int. Cl.: A01M 7/00

(54) **ARTICULATED SPRAY BOOM AND A METHOD OF FOLDING AN ARTICULATED SPRAY BOOM**

(30) Priority: 11.08.2014 US 201462035536 P; 09.04.2015 US 201562145230 P
(71) Applicant: Deere & Company, Moline, IL 61265-8098 (US)
(72) Inventor: Carlson, Brandon C, Ankeny, IA 50021 (US); Ackermann, Jonathan, Ankeny, IA 50023 (US); Baxter, Garry E, Ankeny, IA 50023 (US); Fisher, Patrick J, W Des Moines, IA 50266 (US); Klemme, Kent A, Ankeny, IA 50021 (US); Ullmann, Ryan S, Ankeny, IA 50023 (US)
(74) Representative: Reichert, Christian

(57) **Abstract**

An articulated spray boom (30) and a method of folding an articulated spray boom (30) is disclosed. The spray boom (30) comprises an inner wing (10, 210), middle wing (8, 208) and outermost wing (6, 206); wherein a first end of the inner wing (10, 210) is horizontal-pivotally coupleable to a vehicle (22, 24), a second end of the inner wing (10, 210) is overhead vertical-pivotally coupled to a first end of the middle wing (8, 208), and a second end of the middle wing (8, 208) is horizontal-pivotally coupled to a first end of the outermost wing (6, 206); wherein in a spray position, the inner wing (10), middle wing (8) and outermost wing (6, 206) extend substantially horizontally in alignment, extending out from the vehicle body; wherein in a transport position, the inner wing (10, 210), middle wing (8, 208) and outermost wing (6, 206) are foldably-collapsed with each said wing (10, 210, 8, 208, 6, 206) substantially horizontally parallel to a surface of the vehicle body; and wherein the middle wing (8, 208) and outermost wing (6, 206) extend aligned above or below the inner wing (10, 210); and a length of the middle wing (8, 208) is less than a regulated standard vertical height restriction; wherein vertical points towards a sky.

## Description

### Field of the Disclosure

This disclosure relates generally to fluid sprayers having folding booms such as those used in agriculture and industrial applications.

### Background of the Disclosure

Large system sprayers apply nutrients, herbicides, paints, chemicals and other liquids such as those used in the agriculture or manufacturing industries; sprayers tend to be very heavy because they often have large physical structures, such as booms, fluid distribution pipes, fluid tanks, along with the weight of the fluid. The spray booms may extend over 40 meters long and may be mounted on either side of a vehicle, extending outward perpendicular to the direction of travel. When mounted on a vehicle such as a self-propelled sprayer, the longer booms cannot be readily transported on ordinary roads or cannot clear obstructions such as bridges and wires. Different countries may specify a standard maximum height and/or width for the combination of a vehicle with a boom when it is transported on public roads.

### Summary of the Disclosure

Various aspects of example embodiments are set out below and in the claims. Embodiments include a sprayer system having lightweight booms mounted on a vehicle and the boom has suspension support and folding mechanisms that comply with transport standards. For example, the boom wings are folded hybrid style, overhead and partly horizontally. Other features such as nozzles, fluid distribution pipe and skirts are located underneath the boom. Other embodiments are disclosed in the detailed description, accompanying drawings and claims.

### Brief Description of the Drawings

The detailed description refers to the following example figures:
Figure 1 depicts an example vehicle carrying an articulated spray boom.
Figure 2 depicts an example spray boom with three sections including the inner section that attaches to a center frame of a vehicle.
Figure 3A depicts an example of a suspension-span boom.
Figure 3B depicts another example of a suspension-span boom.
Figure 4A depicts a composite top view of an example three stages of a fold method.
Figure 4B depicts a side view of the example fold method of Fig. 4A.
Figure 5 depicts a flowchart of the example method of folding or unfolding a boom.
Figure 5A depicts an example left-side boom wing viewed from the rear such as for a boom mounted at the rear of a vehicle, or a right-side boom wing viewed from the front for a boom mounted ahead of the vehicle.
Figure 5B depicts an example first position of a fold of Fig. 5A.
Figure 5C depicts an example second position of a fold of Fig. 5A.
Figure 5D depicts an example third position of a fold of Fig. 5A.
Figure 5E depicts an example fourth position of a fold of Fig. 5A.
Figure 5F depicts an example fifth position of a fold of Fig. 5A.
Figure 5G depicts an example sixth position of a fold of Fig. 5A.
Figure 5H depicts an example seventh position of a fold of Fig. 5A.
Figure 5I depicts an example eighth position of a fold of Fig. 5A.
Figure 5J depicts an example ninth position of a fold of Fig. 5A.
Figure 6 depicts example lengths for the sections of a boom.
Figure 7 depicts a pictorial flowchart of an embodiment of a hybrid boom fold.
Figure 8 depicts a pictorial flowchart of folding an example boom near the boom joints.
Figure 9 depicts a top view of an example boom joint region that folds (pivots).
Figure 10 depicts a perspective view of the example boom joint region of Fig. 9.
Figure 11 depicts another embodiment of a boom with two example boom joint regions that fold.
Figure 11 A depicts a magnified view of one of the boom joints shown in Fig. 11.
Figure 11 B depicts a magnified view of the other boom joint shown in Fig. 11.
Figure 12 depicts another embodiment of a boom with two example boom joint regions that pivot.
Figure 13 depicts another embodiment of the boom joint region that folds.
Figure 14 depicts another embodiment of the boom and boom joint regions that fold.
Figure 14A depicts details of the embodiment shown in Fig. 14.
Figure 15 depicts an embodiment of an exterior of a boom that folds.
Figure 16 depicts a perspective view of the example shown in Fig. 15, having spray nozzles and plumbing located underneath a tubular boom.
Figure 17 depicts another end perspective view of the example shown in Fig. 15.

### Detailed Description

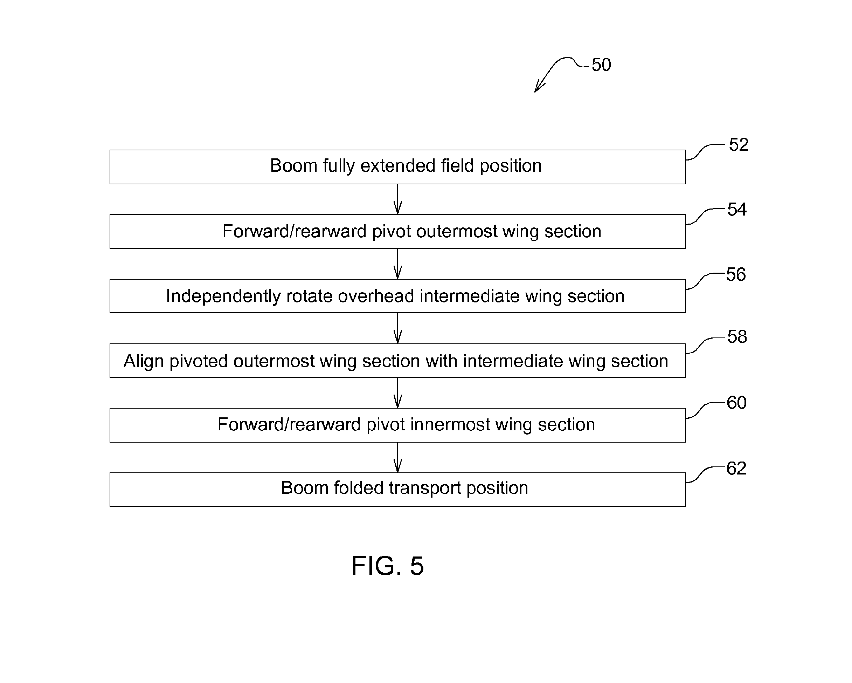

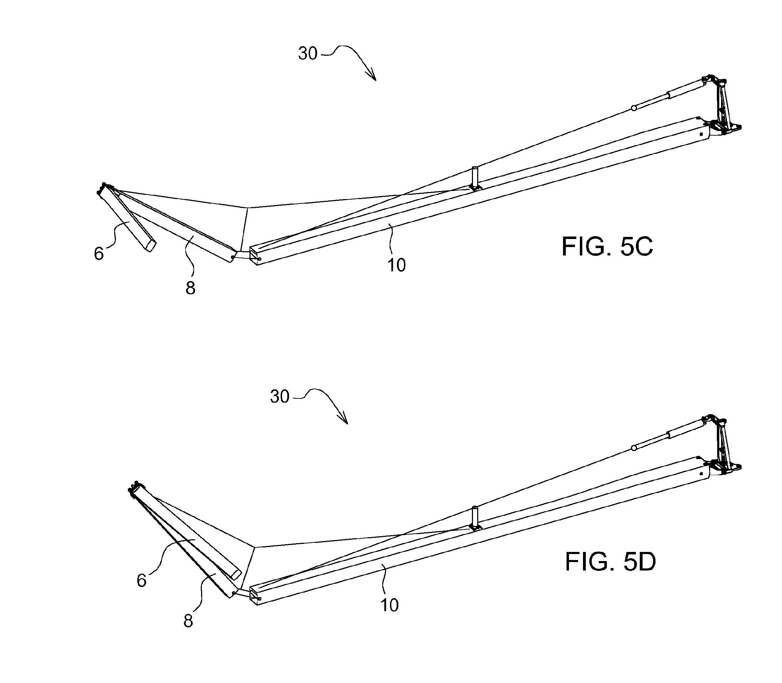

This disclosure provides example embodiments of lightweight articulated spray boom systems having hybrid folding methods that include an over-the-top fold ("overhead fold," e.g. vertically upward sweeping an arc in the air; e.g. element 8 in Figures 5D - 5J), where the direction of "top" is taken to be generally vertically upward toward the sky, and "bottom" is toward the Earth or ground. Normally, overhead folding does not allow for easy compliance with height restrictions such as the International Standardization Organization ISO standard (e.g. ISO 4254-6 or ASABE AD4254-6) of four meters because the boom sections may exceed four meters, especially for longer booms. However, in some example embodiments described below, the outermost and middle sections of the boom are joined together by a structure to fold the outermost section rearward or forward up to a maximum angle, where "rear" is opposite the direction of travel of the boom. The middle section of the boom is then pivoted overhead at a height less than four meters. Such embodiments remain compliant with vertical-fold height restrictions because an effectively-shorter boom is pivoted overhead. Alternatively, the fold method takes advantage of the shortest section(s) of a boom, a section that is shorter than the height restriction, to perform an overhead pivot. One advantage of the embodiments is that, torsional loading is minimized as compared to that for a longer boom. The folded embodiments also yield a narrower-width storage or package configuration, thus allowing for easier transport of the vehicle within a single highway lane or on a narrow road.

There are additional aspects of the boom and its folding mechanism. For example, by using a slim, single tubular beam geometry for the boom sections, the folding process results in a very narrow width boom storage position as compared with a non-tubular boom. And in some embodiments, the geometry of the fluid distribution pipes and nozzles are tucked under the boom for a final more compact folded package. Also with a slim and lightweight single tubular boom, the boom section joints and spring or hydraulic system can fold or unfold faster and also use less energy.

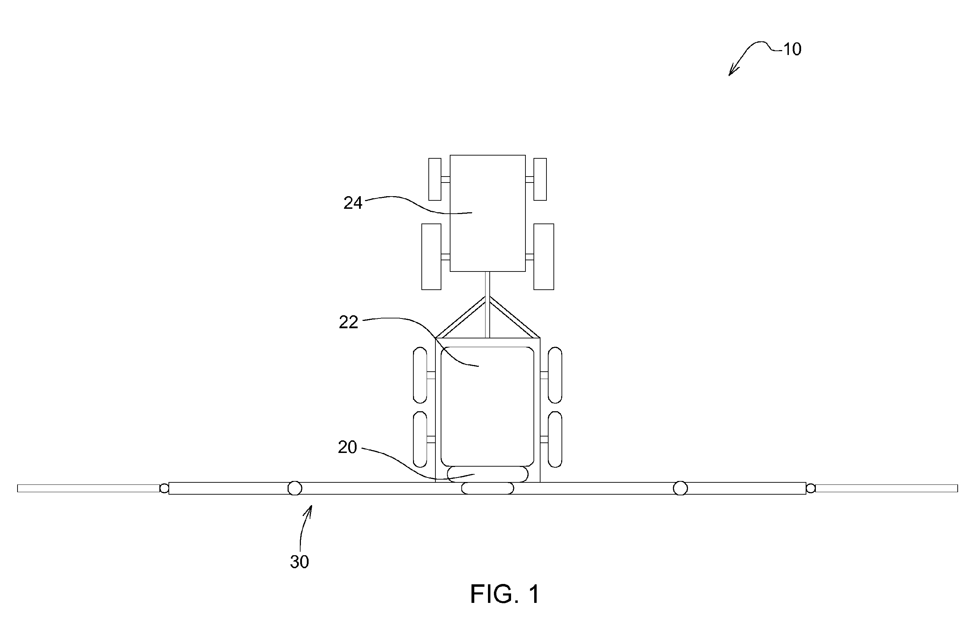

Figure 1 depicts a top view of an example vehicle 24 towing a chemical storage tank 22, on the back of which is mounted a spray boom 30 with a left wing and right wing. In other embodiments, boom 30 is mounted to the front of the vehicle 24, or the sprayer is a self-propelled integrated vehicle carrying the tank 22 and the spray boom 30. The left wing and right wing of the boom 30 each has three or four sections, an inner wing 10, an outer wing 8 and a breakaway wing 6. The left and right wings are each mounted or suspended to a center frame or center rack 20 that is attached to the vehicle 24 or behind the tank 22. The center frame 20 is made of metal such as steel or aluminum, but can also be partially replaced with composite material such as polymers, plastic and/or fiber, where it may be more cost-effective and longer-lasting to do so. In some embodiments, part of the vehicle 24 (e.g. the cab or hood) is also made of lightweight man-made materials such as plastics and/or fiber. The boom system provides a spray of chemicals to a target area. Fluids from a chemical tank 22 are transferred to the opening/closing valves mounted to the side of the boom 30 through manifolds, fluid distribution pipes and other feed lines ("plumbing") that are attached to the boom 30.

The fluid distribution pipes have nozzle attachments hanging down along the length of the pipe, through the entire stretch of a boom 30. The nozzles release the chemicals and fluids to the targeted spray area.

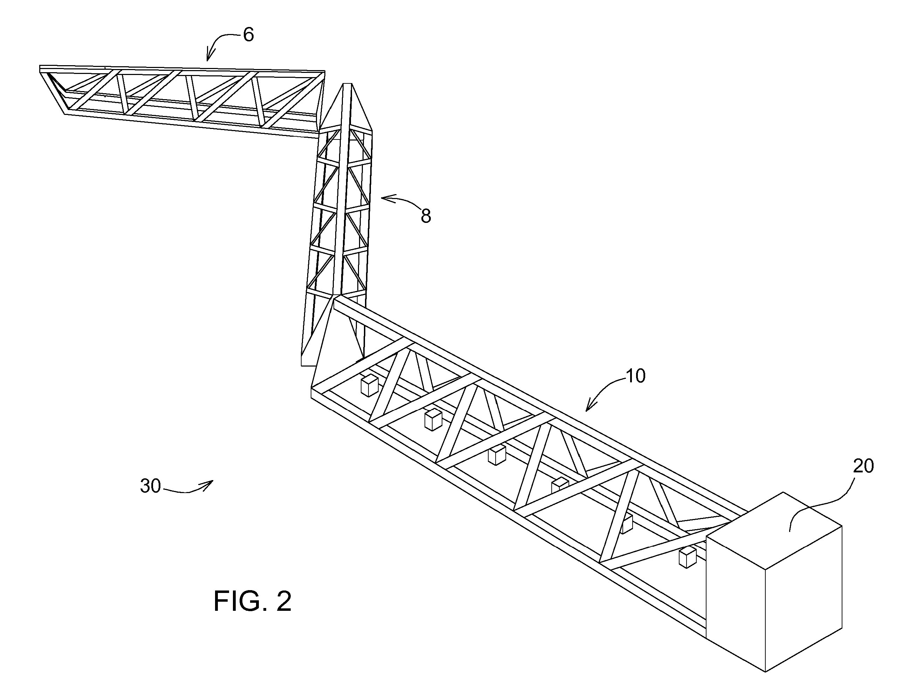

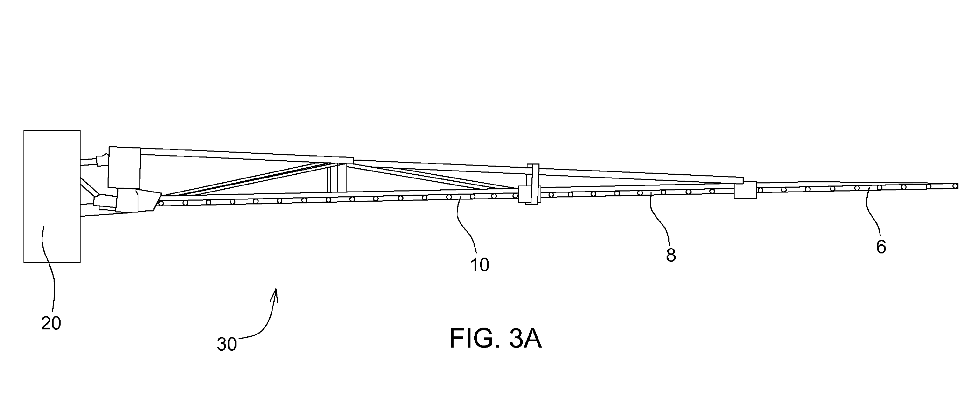

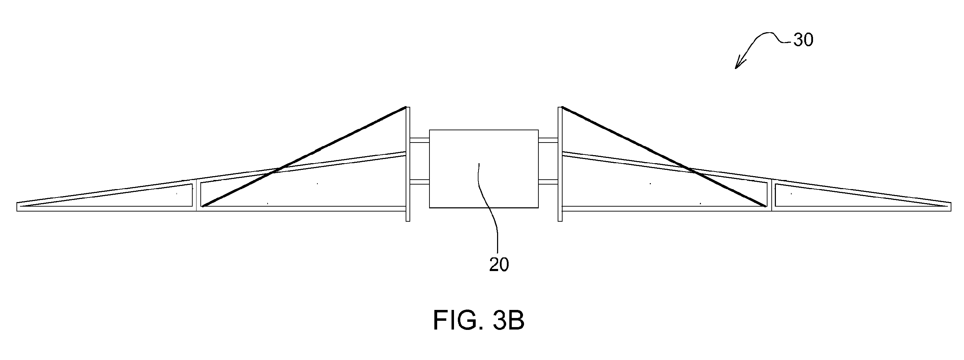

Figures 2, 3A, and 3B depict example booms 30 made of material including composite structures of steel, aluminum, alloys, fiber, carbon fiber, flax fiber, fiberglass, graphite, polymers and plastics. As some materials become cheaper, yet lighter structures made from graphene, composite plexiglass and polymer-coated metals are also cost-effective.

Different fiber strands, layers or sheets of material are directionally interleaved to make even slender booms 30 more durable and rigid.

In Figs. 2, 3A and 3B, only one side of the sprayer center frame 20 is depicted, showing a boom 30 on the right side of the center frame 20. A mirror image boom 30 structure exists on the other side of the center frame 20, and thus usually a mirror image boom fold or unfold process occurs, although in some embodiments an asymmetric fold is actuated involving only one of the two booms. In these examples, the inner wing 10 closest to the center frame 20 is hinged or joined to the outer wing 8, which is in turn hinged or joined to the breakaway wing 6 that is the outermost wing of boom 30. For example lengths, the sections include a breakaway wing 6 of about 3.5 - 3.9 meters, an outer wing of about 3.4 - 3.8 meters and an inner wing of about 9 - 9.4 meters. As another example, the breakaway wing 6 is about 5.5 - 5.9 meters, which is longer than the 4 meter ISO standard. For longer booms 30, there may be four or more sections; for example, an inner wing of 9 - 10 meters, first outer wing of about 3.6 meters, followed by a secondary outer wing of about 5 - 5.8 meters, and finally a breakaway wing of about 5.7 meters. So both the secondary outer wing and the breakaway wing are longer than the 4 meter ISO standard.

In alternative embodiments, the boom 30 inner wings are mounted to either a floating center frame 20 or a to fixed center frame 21. The fixed center frame 21 is bolted to, welded to or formed as part of the vehicle 24, either in the front of the hood section or towards the very rear of the vehicle 24 such as after a spray fluid tank. If there is a floating center frame 20, it is pendulum or motor attached to the fixed center rack or frame 21. The floating center frame 20 has the ability to move vertically up and down, or also move horizontally side to side with respect to the vehicle 24 and the fixed center frame 21. The boom folding methods described below can be performed when the center frame 20 and extended boom are their lowest distance off of the ground or spray target. Then after the fold process completes, the folded boom is raised to its storage rack or cradle height. Alternatively, the boom folding or unfolding is performed at a default height off of the ground or spray target, where the default height is at approximately (e.g. within a foot of) the height of the storage rack or cradle.

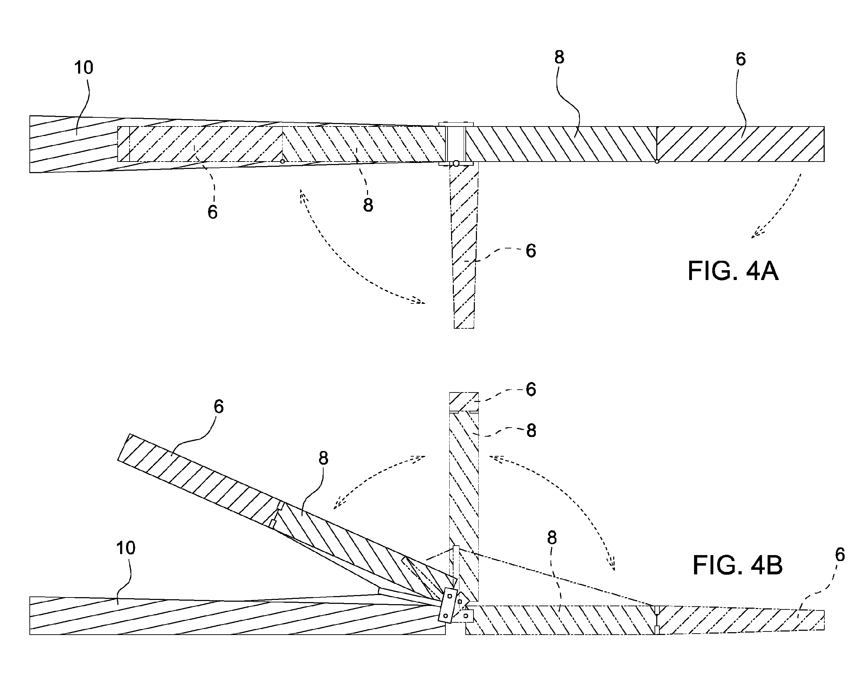

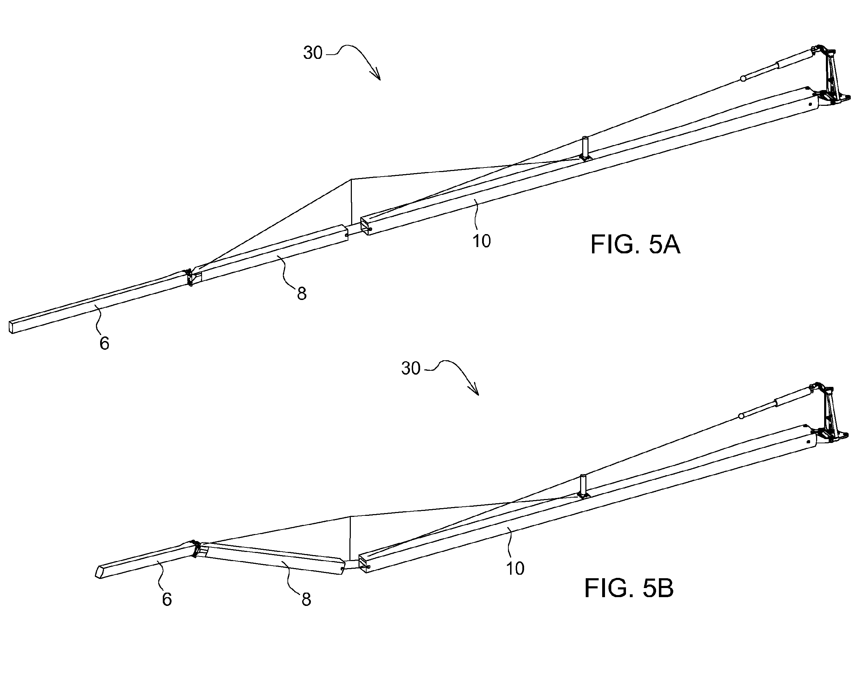

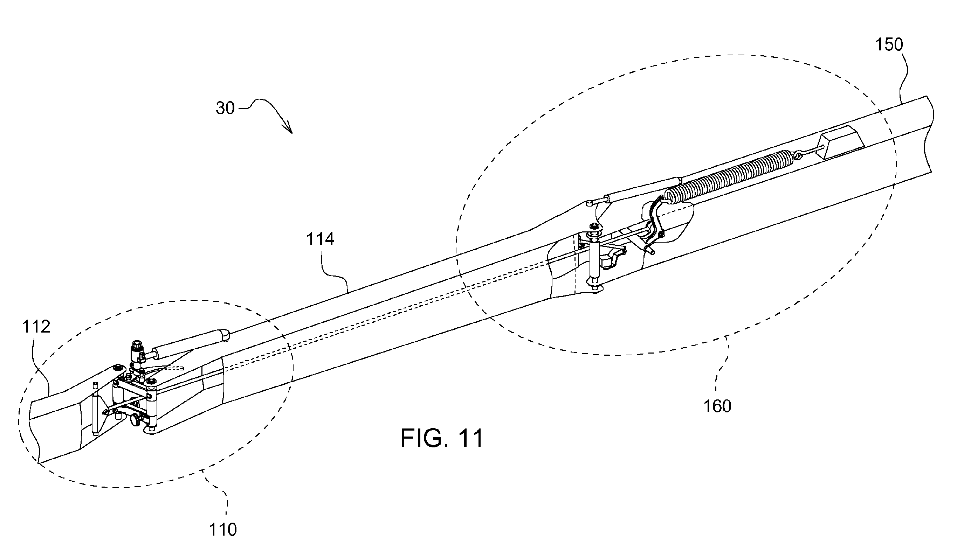

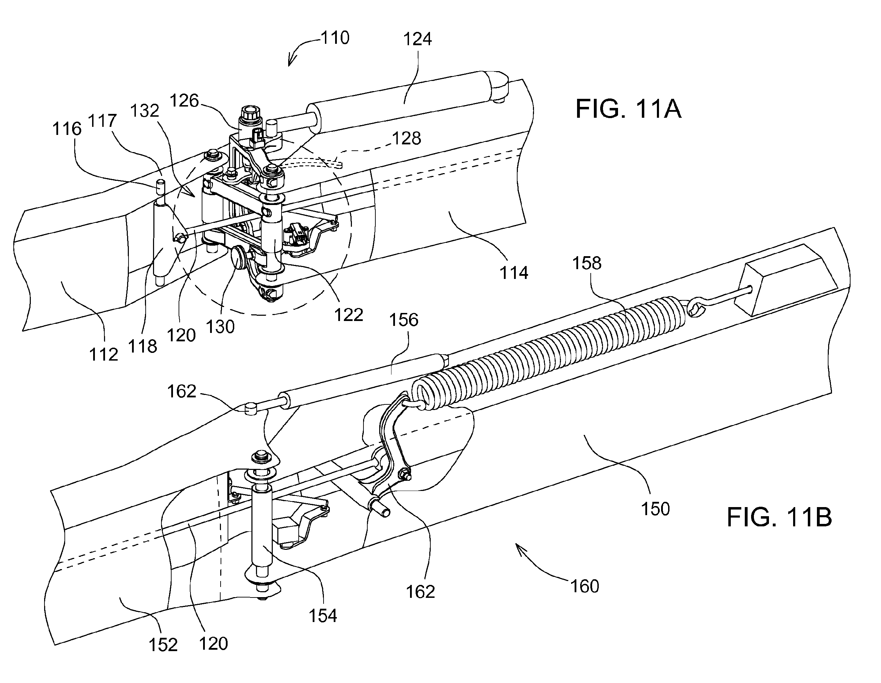

In operation, Figures 4A and 4B depict an overlap of different stages in an example boom fold method that complies with transport dimension requirements or facilitates storage or packaging. Fig. 4A provides a top view of the boom 30, depicting a composite of three different positions or stages that occur in and out of the plane formed by the boom 30 and the ground or spray target (plane approximately perpendicular to the Earth or to the paper). Fig. 4B provides a composite drawing of three positions of the boom motion shown in Fig. 4A, but now viewed from the side. Starting out with the spray boom fully extended in its field position (Fig. 5A, right side), the boom moves from its field position to its transport position by first pivoting the breakaway wing rearward or forward by up to a maximum angle such as 90 - 110 degrees (see e.g. Figs. 5B - 5D). The rearward or forward pivot occurs substantially in a horizontal plane that is substantially parallel to the ground (e.g. within 10 degrees from the average surface plane of the Earth). One example boom joint includes a tether cable (steel or fiber rope) or rod between the breakaway wing and the outer boom that prevents the breakaway wing from swinging or pivoting farther than the maximum angle (e.g. Fig. 11 A). Alternatively or in conjunction with the cable, the boom section's joint region include protrusions or stoppers that act as physical barriers that prevent the breakaway wing from rotating any farther from the long axis of the outer wing (e.g. Fig. 11 A).

In Figs 4A - 4B, after the breakaway wing folds rearward or forward in a first stage, then subsequently in a second stage, the outer wing pivots overhead. The two stages are performed sequentially in time and independently physically to maintain stability (less torque or other undesired forces acting on the boom 30 and vehicle 24). Having one control mechanism for each boom section enables independent actuation to pivot each boom section, independent of another boom section. Independent boom section operation enables more flexibility and choices of movements. When all of the stages of pivotal folds are performed independently, this also helps during a normal spray operation, and not just during a folding process. For example, in hilly fields or where the spray area is narrower, extending the full span of the boom 30 may hinder operation and travel. Then "shortening" the length of the boom helps. The breakaway wing is folded rearward, forward or even upward toward the sky, and the spray nozzles mounted on the breakaway wing portion of the boom 30 are turned off. Meanwhile, the rest of the boom 30 (e.g. inner wing and outer wing) is fully extended and operates as usual. This independent folding feature is also applicable to a boom 30 with four or more sections where one or more sections are folded so that the apparent length or extent of the boom 30 is shorter during the spray operation.

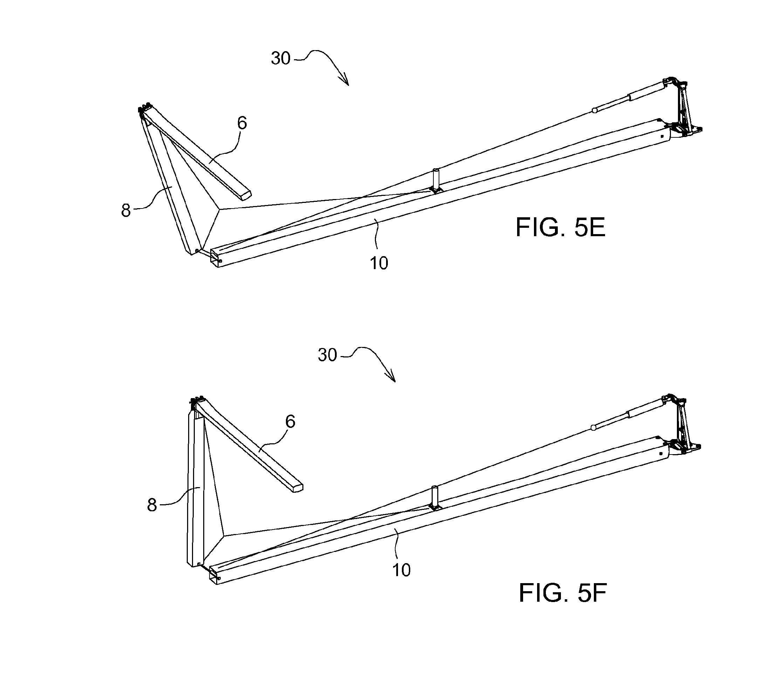

In another embodiment, Figures 5A - 5J depict perspective views of a boom fold where the two fold stages are performed simultaneously in time (e.g. within a minute) for faster folding. For example, Figs. 5B - 5D show that while the breakaway wing is folding rearward by up to the maximum angle, the outer wing is simultaneously pivoting overhead. At the pinnacle of the overhead fold, since the breakaway wing is folding rearward or has already folded rearward, the entire boom structure is still within a maximum length or vertical height restriction (e.g. 4 meters towards the sky in Figs. 4B, 5E, 5F) because the outer wing is designed with a length that is shorter than the height restriction. Although the two folds stages are performed simultaneously in time, the control for and actuation of the two folds are still physically independent (e.g. independent sensors, independent signals to move a motor or hydraulics). Alternatively, a single cable, rod or pulley system can cause the two or more folds to initiate simultaneously physically and in time. For instance, one rod or pulley is simultaneously tied to two or more boom sections so that the motion of contraction/extension of the one rod/pulley moves both of the sections. Figs. 5A - 5J may also represent a boom 30 that is mounted ahead of a vehicle 24. Whether ahead or behind the vehicle 24, the boom 30 can have breakaway wings that pivot forward or rearward, or towards the vehicle 24 or away from the vehicle 24.

As depicted in the example Figs. 4B and 5B - 5H, during or sequentially after the breakaway wing is folded rearward by up to the maximum angle (e.g. 90, 110 or 120 degrees), the outer wing moves pivotally over the top nearly 180 degrees (i.e., to within 10 degrees of 180 degrees) to rest on top of the inner wing. When the cross sectional area of boom 30 is circular or rectangular, the boom sections can readily and compactly rest on top of one another. The outer wing length is designed so that it allows the over the top pivotal fold at a height less than the height restriction (e.g. four meters). If the boom 30 has four sections, at least one of the section's (e.g. the first outer wing) length is shorter than the height restriction so that an overhead fold can be performed with that section.

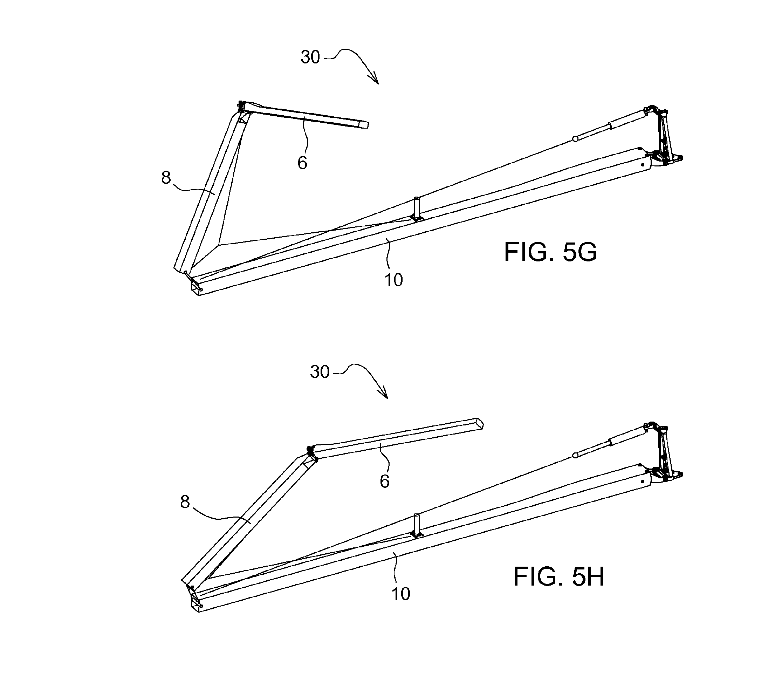

As depicted in Figs. 5H - 5J, after the outer wing has rotated past the apex of the overhead pivot or after the outer wing 8 has actually rested on top of the inner wing 10, the breakaway wing 6 straightens out to its original extended field position so it rests in parallel with the inner wing 10 and with the outer wing 8. The breakaway wing 6 is aligned with the outer wing 8 (e.g. Figs. 4A left hand side, or 5J). Afterwards or while the other pivotal motions are occurring (e.g. outer wing 8 is pivoting overhead), the entire boom 30 pivots horizontally towards the vehicle 24 until the folded boom 30 is close to and adjacent to a side of the body of the vehicle 24. That is, the inner wing 10 pivots around its joint with the center frame 20, from the field position to a transport position towards a storage cradle that is horizontally adjacent to the side of the sprayer vehicle 24.

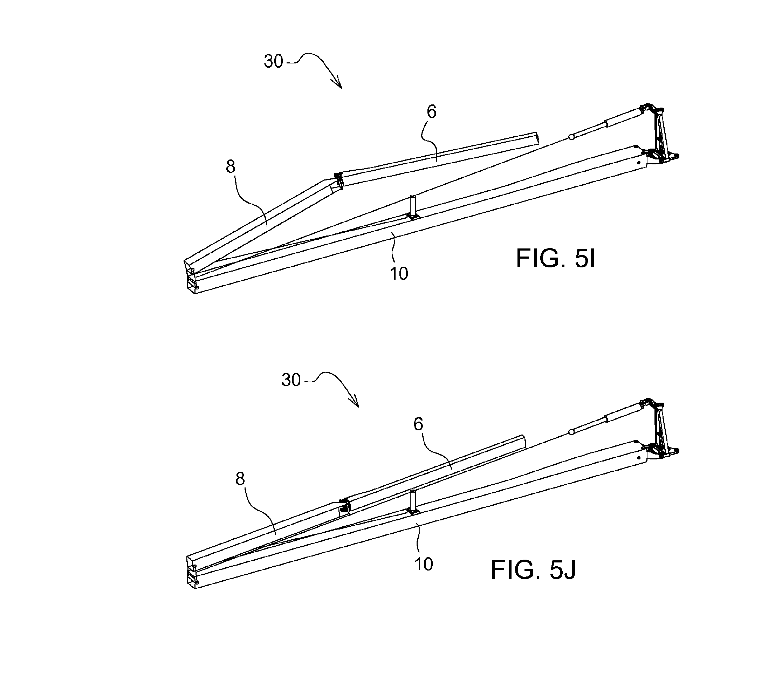

Figure 5 is a flowchart for an example boom fold method 50. In stage 52, the boom 30 moves from an extended field position. An outermost boom section (e.g. breakaway wing 6) pivots laterally or horizontally towards the rear or forward (fore-aft) direction of the sprayer vehicle 24 in stage 54. In stage 56, an intermediate boom section (e.g. 8) rotates vertically overhead, carrying the outermost boom section (e.g. 6) overhead as well. In stage 58, the outermost boom section (e.g. 6) straightens out until it aligns with the central axis of the intermediate boom section (e.g. 8). In stage 60, an innermost boom section (e.g. 10) pivots laterally or horizontally towards the direction of a cradle or body of the sprayer vehicle 24 until the boom 30 is in its transport position. The stages of operation are reversed to unfold a boom 30. A vehicle operator may set up some of the stages to automatically occur simultaneously, but the physical mechanisms that actuate the motions are still independent of one another.

Fig. 5 also applies to a method of unfolding a boom 30 by reversing the direction of the arrows between the stages in Fig. 5. To go from a storage or transport position to a field spray position, the pivotal motion sequences are reversed so that instead of folding, the wing sections open or unfold. Also the pivotal motions are in the opposite direction (e.g. counterclockwise instead of clockwise). Each boom section unfolding operation is again performed independent of another unfolding operation. Alternatively, unfold motion monitoring or motion sensors or position sensors are mounted to the boom sections and the sensor signals trigger the individual unfolding to occur simultaneously rather than sequentially. The motion sensors include proximity sensors located on opposing surfaces of two boom sections or include position sensors (linear or rotational position potentiometers) located in the joint region between two boom sections. If the boom 30 is mostly hollow, the sensor can also be embedded inside the boom or in the hollow of the boom. Sensors are mounted with a bolt or adhesive. For more flexibility, the sensors are mounted using velcro or magnet and so on with adhesive backing so that the sensors may be relocated to various locations to monitor the motion. The sensors are able to communicate with a centralized database at the farm, or with a cloud server, or by default with a central database on the vehicle 24 itself. The information is analyzed either dynamically and/or even post operation to determine the motion of the vehicle 24 and the boom relative to the environment (e.g. boom suspension controller, vehicle ground speed, ground terrain condition).

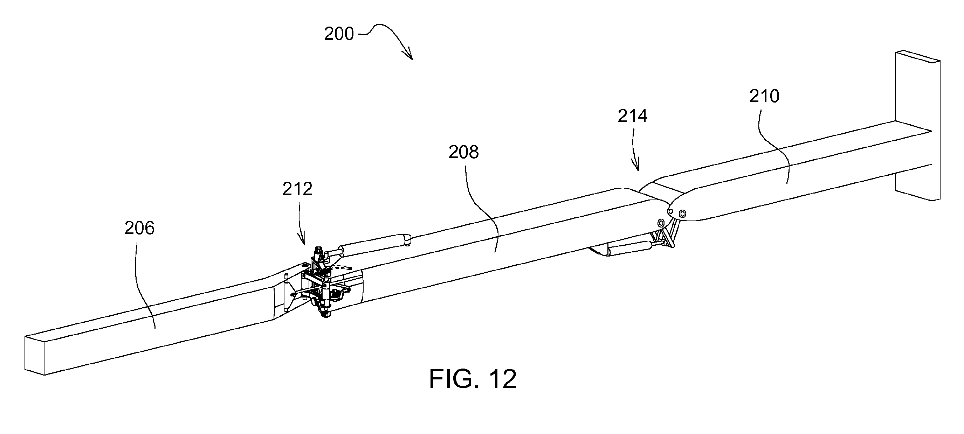

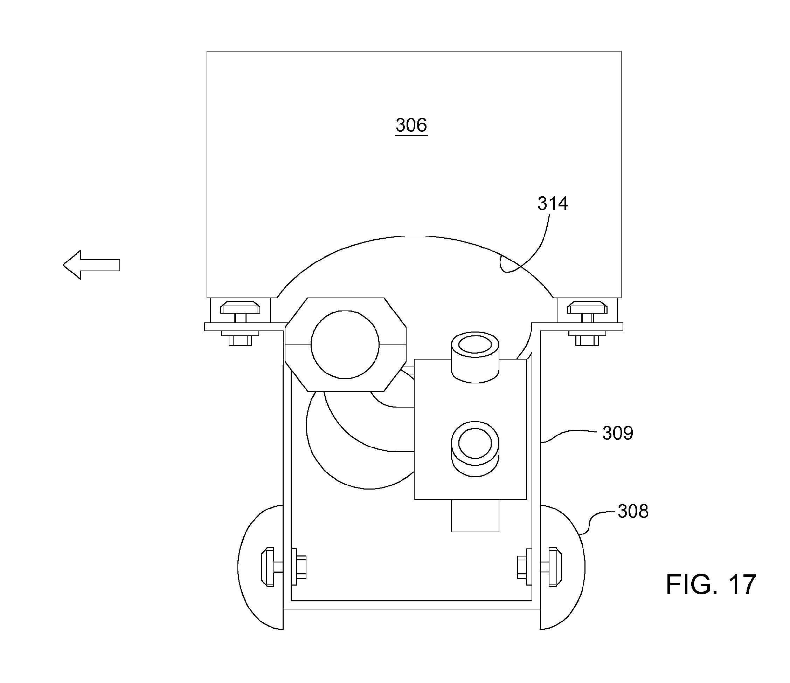

To initiate a fold or unfold of a boom 30, one method includes an electronically wired or wirelessly controlled sprayer system such as a centralized controller circuit (e.g. computer) in a cab or at a remote site that instructs the mechanical or hydraulic devices in the boom sections to begin their movements. One method includes actively electro-mechanically tripping the breakaway wing mechanism on the breakaway wing near the hinge region between the breakaway wing and the outer boom sections. In one embodiment, there is a cable or fiber rope between the breakaway wing and the outer wing, such that when the boom is commanded to fold, the cable automatically trips, pulls and causes the breakaway wing to pull in and bend by some angle such as approximately 90 degrees with respect to the outer wing (e.g. Fig. 17 of the Provisional Application Ser. No. 62/035536). As yet another alternative, the fold mechanism is activated using hydraulic, pneumatic, or electrical cylinders or actuators that are controlled electronic signals. Electromechanical joints such that shown in Fig. 12 are operator or computer controlled to perform a rotation or to pivot the breakaway wing rearward or forward up to the maximum angle.

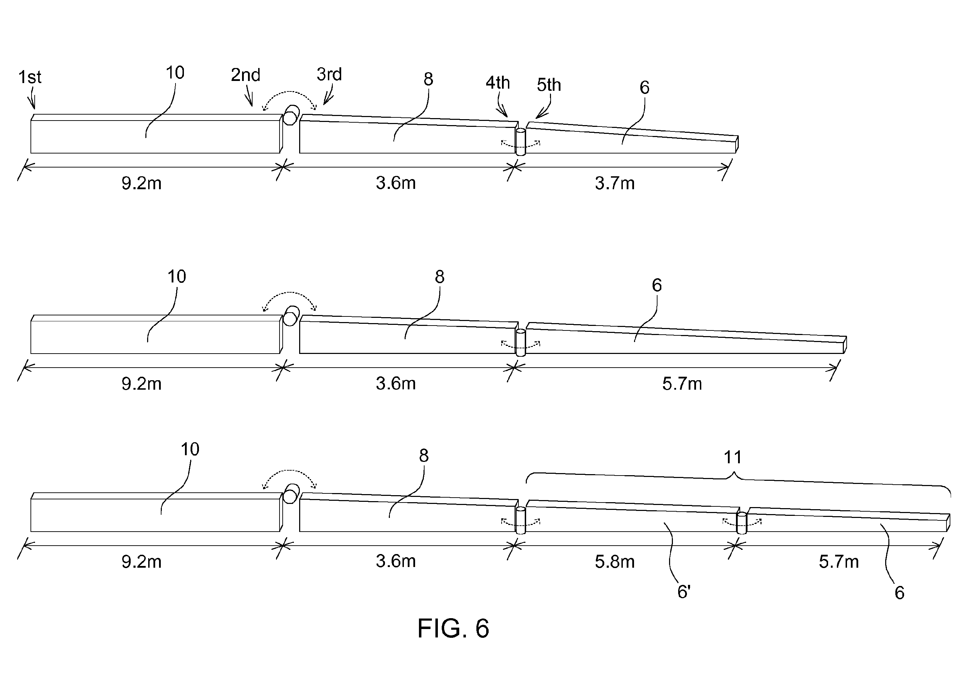

Figure 6 depicts example lengths for each boom section. In the upper two examples (A and B), the boom 30 has three sections, where the outer wing 8 is shorter than the maximum vertical restriction height. An overhead pivotal motion is performed with a wing section such as wing 8 that is shorter than the height restriction. If there are multiple short wing sections, an overhead pivot may be performed with any one or more of the sections. Although the inner wing 10 section is shown with a length of 9.0 - 9.4 meters, it can also be made longer such as 9.6 - 10 meters. A longer inner wing 10 provides more clearance distance and room on which the other wing sections can rest during a pivotal motion when the boom moves towards the final transport position (e.g. Fig. 6).

In Fig. 6, the third (C) example has four boom sections, where the first outer wing 8 is shorter than the height restriction. In addition to the example lengths shown in Fig. 6, other possible lengths include approximately (7.8 - 9.8m, 3.4m, 2 - 4.5 m, 3.5m) (going from left to right, or from inner wing to breakaway wing). For booms 30 that have three or more sections, one method of folding the boom 30 that still complies with height restrictions, is to treat the breakaway wing 6 and secondary outer wing 6' as a "single" integral object serving as "one" outermost section 6". The single object 6" pivotally moves rearward or forward horizontally by up to the maximum angle, in a plane that is at least approximately parallel to the ground or surface of the Earth. The first outer wing 8 simultaneously or subsequently pivotally moves overhead by almost 180 degrees to rest in parallel with and above the inner wing. The single integral object 6" either simultaneously or subsequently straightens out until it rests in line with the inner wing and with the first outer wing. All of the pivotal motions (or combinations or pairs of the pivotal motion) of the boom sections can occur either simultaneously or sequentially so long as the entire boom height is below some maximum distance.

In other embodiments of the fold method, a forward fold of the breakaway wing is initiated rather than a rearward fold. Alternatively, a skyward fold (or an oblique or angled fold, partly skyward and partly forward or rearward) is possible if the breakaway wing length and the outer wing, together, are sufficiently shorter than the height restriction. The forward fold or angled fold can also pivot the breakaway wing by up to a maximum angle so that the breakaway wing does not add to the maximum vertical height of the overall boom during the overhead fold of the outer wing. The breakaway wing is pivotally hinged to the outer wing in such a way that the breakaway wing can swing backwards or forward (e.g. U.S. Pat. No. 3544009, a bidirectional or a tri-directional hinge) when the breakaway wing encounters an obstacle. So the fold procedure can also pivot the breakaway wing either forward or backwards or at a 10 - 20 degree angle from the horizontal. In another embodiment, the joint between the boom sections is electro-mechanically motorized and electrical signals control the rotation of a stepper plate or stepper bearing to a selected fold position. The breakaway wing pivotal fold can be selected to move either forward or rearward based on operator or programmed command, for example, in order to perform a transport-storage fold or to avoid obstructions that may be ahead of or behind the boom.

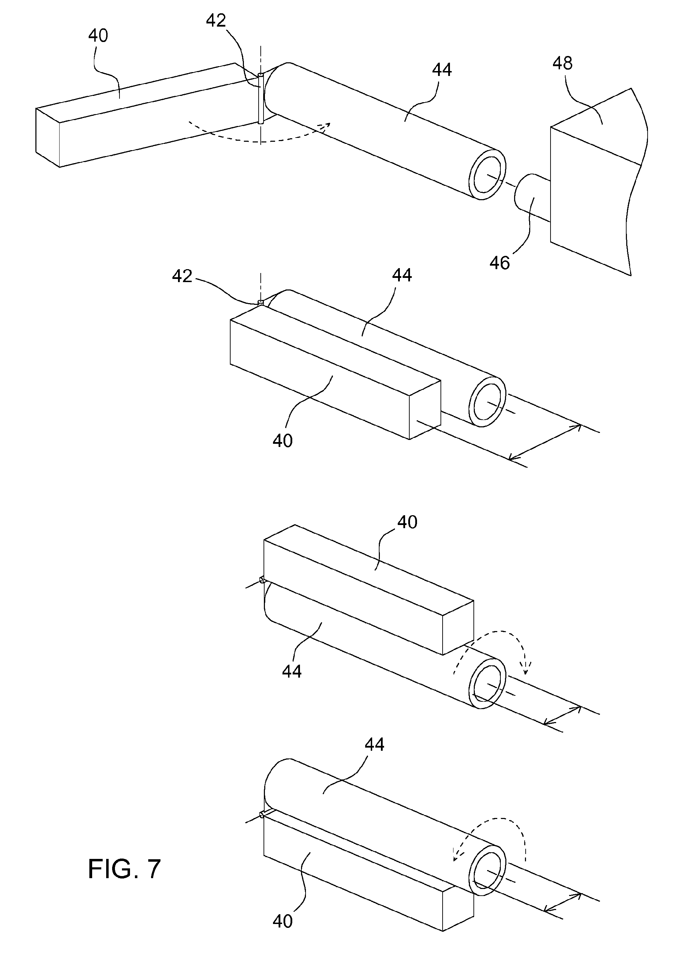

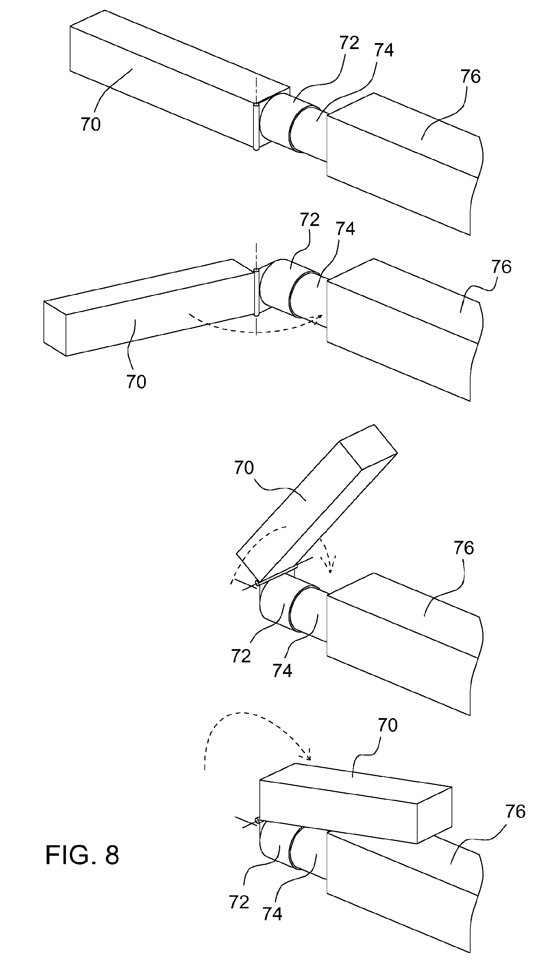

Figure 7 depicts a pictorial flowchart of yet another embodiment of a boom fold method. Instead of an overhead pivotal motion of the outer wing 40, a side horizontal-fold in conjunction with a rotation of a relevant boom section results in a similar final package or storage position. For example, the inner wing 44 is rotationally socketed to the center frame, for example, by a plain bearing or a bushing. Motion is electrically or electromechanically controlled. The outer wing pivotally moves horizontally toward the inner wing until the outer and inner wing lie adjacent to each other; the pivot occurs in a horizontal plane that is substantially parallel to the ground (e.g. within 5 - 10 degrees of a flat field). Afterwards, the inner wing rotates via the electrically controlled bushing or plain bearing, which also rotates the outer wing until the outer wing lies above or underneath the inner wing. If the boom 30 has only two sections (e.g. Fig. 3B) or if the breakaway wing moves as one unit with the outer wing, the method of Fig. 7 results in a narrow-width package fold that is also within vertical height restrictions. If boom 30 has a breakaway wing that is shorter than the vertical height restriction, the breakaway wing can first fold rearward and then it could rotate overhead before straightening out aligned with the outer wing. Otherwise if the breakaway wing is long longer than the restricted height, the breakaway wing can first fold rearward until it is parallel adjacent to the outer wing (e.g. be behind the outer wing in Fig. 7); then the outer wing folds towards inner wing; then the inner wing, outer wing and breakaway wing are all rotated by the rotational motion at the center frame. The breakaway wing rests either above or underneath the outer wing. Alternatively, the breakaway wing straightens out so that it rests parallel to (above or underneath) the inner wing and is aligned with the outer wing. In other embodiments, as shown in a pictorial flowchart of Figure 8, the joint region between the breakaway wing and the outer wing, or between the inner wing and the outer wing, also includes an electromechanical bushing or bearing, which allows even more flexibility and options to pivot, rotate, angle, or adjust the position of one boom section relative to a neighboring boom section. Rotating the boom section tube about its own axis near the joint area may be used as a substitute for the overhead pivotal motion. The movements of the different fold stages are performed either simultaneously or sequentially.

The boom fold methods shown in Figs. 7 and 8 can be used for booms with two or more number of boom sections. The rotational motion (spin about central long axis of a tube) of one boom section or sections relative to another boom section replaces the overhead pivotal motion. Avoiding pivoting overhead eliminates the vertical height compliance problem. An electro-mechanical way of performing the rotational motion is shown in Figure 12, as described below. The electro-mechanical bearing of Fig. 12 has sufficient degrees of freedom to perform either rotations (spin about a long central axis of the boom) or a pivotal motion about a hinge axis. In such an embodiment, the boom 30 has a physical joint that provide two or more fold modes that are available to an operator or to automated computerized commands.

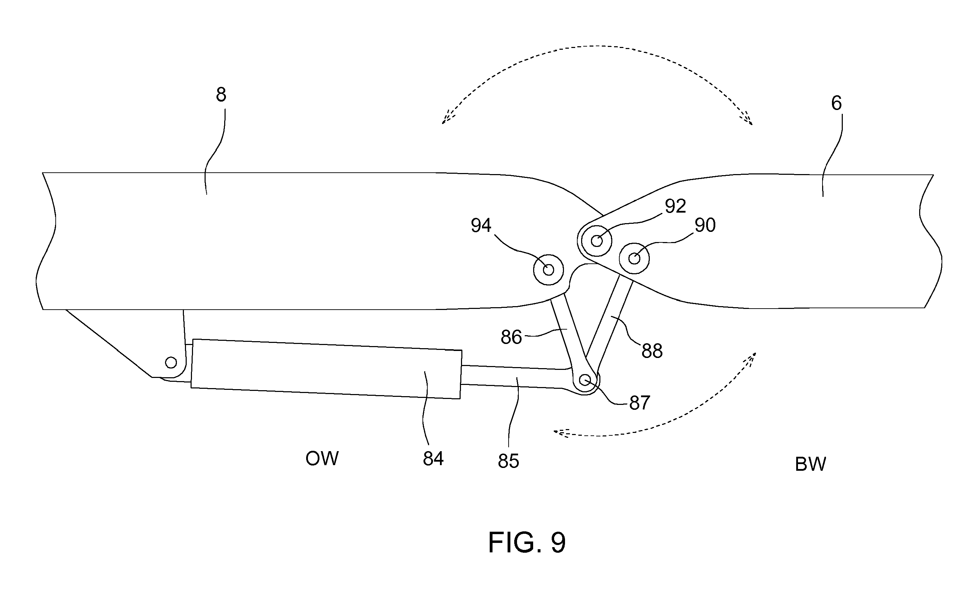

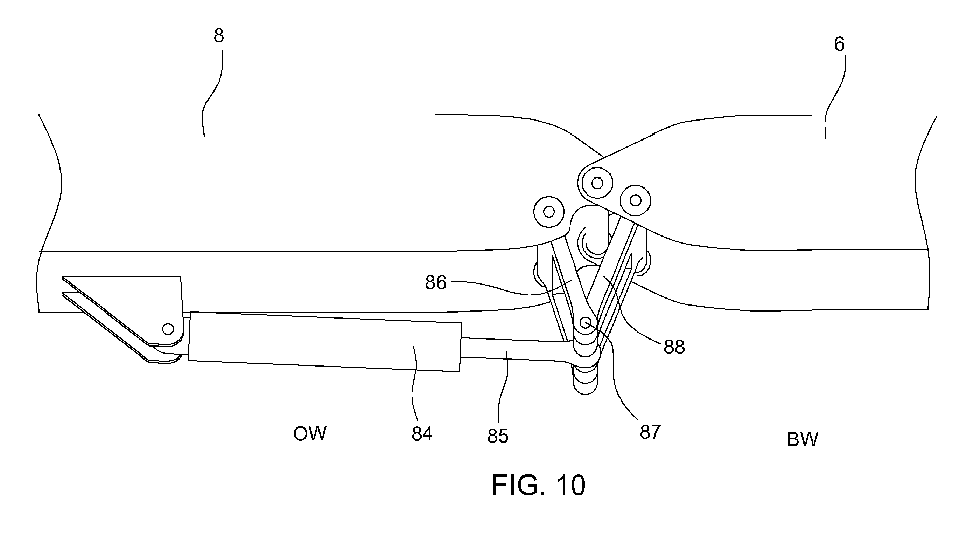

Figure 9 depicts a side or top view of an example hydraulic device to align or to fold or unfold a breakaway wing 6 from an outer wing 8 of a tubular boom 30. Figure 10 depicts a perspective view of the hydraulic device of Fig. 9. A hydraulic cylinder 84 is connected at its base end to the outer wing 8 and is pivotally connected at its rod 85 end to link connections 87 in the joint region between the outer wing 8 and the breakaway wing 6. Link connections 87 are coupled to securing rods 86, 88 in the endpoint extensions of both the outer wing 8 and the breakaway wing 6. By extending the rod 85, the breakaway wing 8 is pivoted from its transport position to its field position, and the breakaway wing becomes aligned with the outer wing 6. In reverse, retraction of the rod 85 causes the breakaway wing 6 to fold or pivot towards the outer wing 8. Actuation of the rod 85 is controlled for example by automated computer or operator command.

Figure 11 depicts an example boom 30 with two different example horizontal-pivoting joint mechanisms 110 and 160. The boom 30 in Fig. 11 is tubular and made of lightweight materials such as aluminum or a composite fiber. The tubular boom includes a single hollowed beam or "pole" having a circular or rectangular or square-like cross-section as shown in the figures. The boom 30 has four sections, an inner wing (not shown in Fig. 11), a first outer wing 150, a second outer wing 114, and a breakaway wing 112. Figure 11 A and Figure 11 B depict magnified views of the joint regions 110 and 160 in Fig. 11. Fig. 11 A depicts a hydraulic fold hinge 110 between the second outer wing 114 and the breakaway wing 112. Fig. 11 B depicts a second hydraulic fold hinge 160 between the first outer wing 150 and the second outer wing 114.

In Fig. 11 A, the example joint region 110 adjacent to the breakaway wing 112 accommodates at least three states of operation or motions: 1) alignment when the boom 30 is in its extended field position during spraying, 2) damage prevention when the breakaway wing is swinging ("breaking away") after hitting an unexpected obstacle; and 3) folding and unfolding the boom 30. Under the first situation (1), the breakaway wing is aligned with the rest of the boom sections; to help maintain alignment, there is a steel, fibrous or polyester tension cable 120 tied between the breakaway wing and a spring 158 riveted or connected to the second outer wing 114. One end of cable 120 is attached to a plate 118 hinged to a vertical anchor pin 116 near the joint end 117 of the breakaway wing 112. The other end of cable 120 is attached to a rocker arm 162 end of the tightly coiled spring 158 that is fixed or mounted to the material of the second outer wing 114. The tension on the cable 120 and the stop knobs 130 hold or stabilize the position of the anchor pin 116 such that the breakaway wing 112 and the second outer wing 114 remain self-aligned during an extended field position of the boom 30. During a folding or unfolding process of the boom 30, an electronically-controlled force (e.g. due to a solenoid lock pin 126) may hold the breakaway wing 112 in an extended position or some other desired angle, while the rest of the sections of the boom 30 are folding or unfolding (i.e. when the tension on the cable 120 is varying). Under the second situation (2), when an obstacle hits the breakaway wing 112 with a collision force larger than the force of the solenoid lock pin 126 or cable 120 holding the anchor pin 116 in place, the breakaway wing 112 swings forward or rearward because the breakaway hinge 132 has two parallel rods 122 that allow the breakaway wing 112 to pivot either rearward or forward in a horizontal plane that is approximately parallel to the Earth's surface. The tension on the cable 120 tends to counterbalance and straighten the breakaway wing back towards its original position. And, the breakaway wing 112 is prevented by knobs 130 from swinging farther from alignment by more than about 110 degrees. In the example of Fig. 11A, the knobs 130 are mounted to the breakaway hinge 132 in the joint region. There are additional shock pads (e.g. the round rubber pads covering the knobs 130) to damp collisions between the breakaway wing 112 and other boom 30 components. The rods 122, shock pads or other protrusions also limit the movement range or motion of the cable 120. After a breakaway occurs, hook 128 engages or pushes against the second outer wing 114 to help align the solenoid lock pin 126 or the plate 118 and cable 120 and thus also help realign the boom sections.

For a boom 30 with four sections, there may be at least two or three horizontally-folding joints, but they may serve different purposes such as to fold a boom section to avoid terrain obstacles, or to fold or unfold boom sections between a field position and a transport position. In Fig. 11 A, when the joint region 110 folds or unfolds, an operator's computer sends a command signal to engage solenoid lock pin 126 to lock so that the breakaway wing 112 would not rotate further. Alternatively, when the joint region 110 folds or unfolds, an operator's computer sends a command signal to release the solenoid lock pin 126 from its hold position and to activate the hydraulic fold cylinder 124. A rod end of cylinder 124 connects to a hinge end 117 of the breakaway wing 112 or to a member of the breakaway joint 110; the other end of cylinder 124 is mounted to or embedded in a side wall of the second outer wing 114. The cylinder 124 may be connected to the hinge end 117 and breakaway wing 112 such that the rod end extends and pushes away from the barrel of the cylinder 124 during a fold and the rod end contracts (retracts) during an unfold. Alternatively, the rod end of cylinder 124 is configured fully extended and pulls in and the cylinder length contracts, which tugs on the hinge end 117 of the breakaway wing 112, causing the breakaway wing 112 to pivot rearward (in the example of Fig. 11 A) until the breakaway wing 112 contacts the stopper knobs 130. The example joint region 160 of Fig. 11 B operates in a similar way as the joint 110 in Fig. 11 A, but the joint region 160 does not also serve as a two-way (forward-rearward) breakaway mechanism so that there is only one vertical rod pin 154. When joint region 160 folds to go from the field to transport position, the hydraulic cylinder 156 contracts in length, the second outer wing 114 pivots rearward by up to, say, 110 degrees about the vertical rod pin 154. The reverse sequence of motions occurs during an unfold operation.

Figure 12 depicts an example three-section boom 30 with an example horizontal-pivoting joint 212 mechanism and an example overhead (vertical) pivoting joint 214 mechanism. The boom 30 in Fig. 12 is tubular and made of light weight materials such as aluminum or a composite fiber. The boom 30 has an inner wing 210, an outer wing 208, and a breakaway wing 206. The design of the horizontal-pivoting joint 212 mechanism and breakaway mechanism between the outer wing 208 and the breakaway wing 206 may be very similar to that of Fig. 11 A. The overhead pivoting joint 214 region may have a mechanism very similar to that depicted in Figs. 9 and 10.

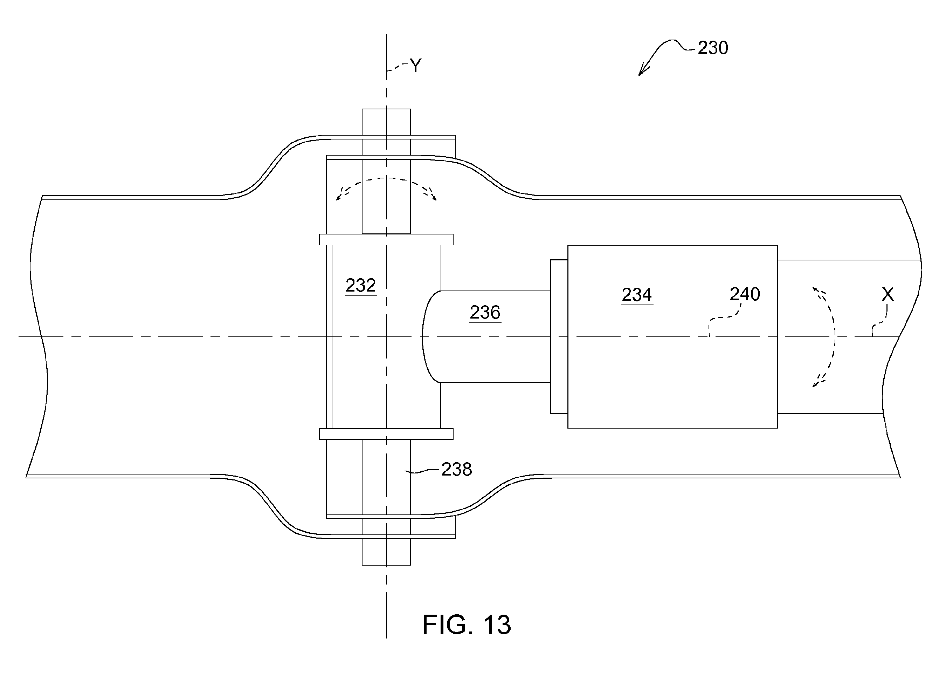

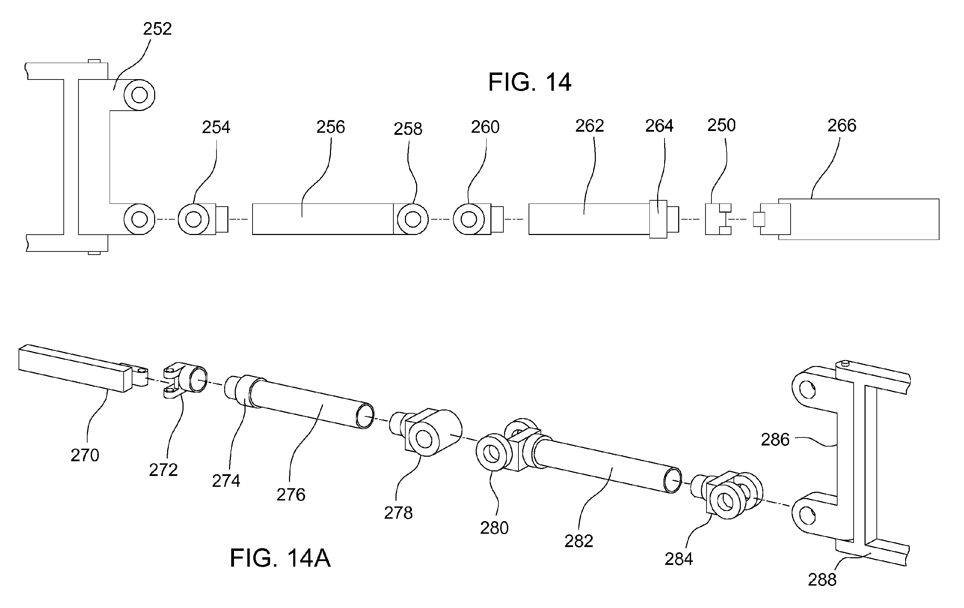

Figures 13 and 14 depict additional example joint devices to carry out the pivotal or rotational motions. Fig. 13 includes a motorized gear 232 controlled by a light weight electric motor (inside 232), lightweight particularly if the rest of the boom 30 is made of light weight materials (e.g. aluminum, fiber or composite fiber). The motorized gear 232 is mounted to or fits within the ends of a boom section and is anchored to the boom material by pin connectors 238 and adhesive. In the example of Fig. 13, the gear 232 enables rotation about the vertical axis Y; the rotation about the Y axis allows pivotal forward or rearward motion between the boom sections such as those shown in Fig. 6. Gear 236 enables rotation about the horizontal axis X for a wing section to the right of the figure (not shown).

Figure 14 and 14A depict other embodiments of boom joints (e.g. 254, 250, 260) that are suitable for tubular booms with constant diameter tubular boom sections (e.g. 256, 262, 266). By comparison, as shown in Figs. 9 - 11, the tubular composite or fiber boom sections 6 and 8 have shaped or flared end regions with reinforced extensions (e.g. flared and/or triangular endpoint) where connectors (e.g. pin hinges, dowel pins) are pin anchored to support the pivotal motion folding and unfolding. Reinforcing the extension regions includes having more plies of fiber or more material to withstand the extra forces applied to keep the boom sections joined together and to support the connectors, springs and hinges on the ends of the boom sections during a pivotal or rotational motion. By contrast, the embodiment of Fig. 14 depicts boom sections 256, 262, 266 free of irregular-shaped reinforced endpoint extensions. The boom sections of Fig. 14 are tubular or cylindrical structures with plain cut ends so that the structure is easy to manufacture such as by a pultrusion process. Such plain tubes are mated, for example by individual, modular joints (e.g. 254, 250, 260) and connecting pieces shown in Fig. 14. Made from fiber or other light weight material, the modular joint pieces insert into or tuck over each end of a boom wing section (e.g. 256, 262, 266); methods of securing the joint pieces to the boom sections include mechanical attachments (e.g. rivets and pins) and/or adhesives. Boom joint and boom joint are connected together for example by bolts, U-shaped fasteners or anchor pins. Fig. 14 also depicts an example modular U or Y-shaped fork joint (e.g. 280) that inserts into or fits over an end of another wing section; or the fork joint (e.g. 284) mates to a fold hinge on the center frame 20. A pin or link inserts into an aperture of the fork joint and also into apertures in the corresponding fold hinge to pivotally mount the inner wing to the center frame 20. Alternative embodiments include joints and end sections that are mostly or all the same in order to reduce manufacturing costs. For instance, joints 280 and 284 can be made identical and both tuck over the tube section 282 in Figure 14A.

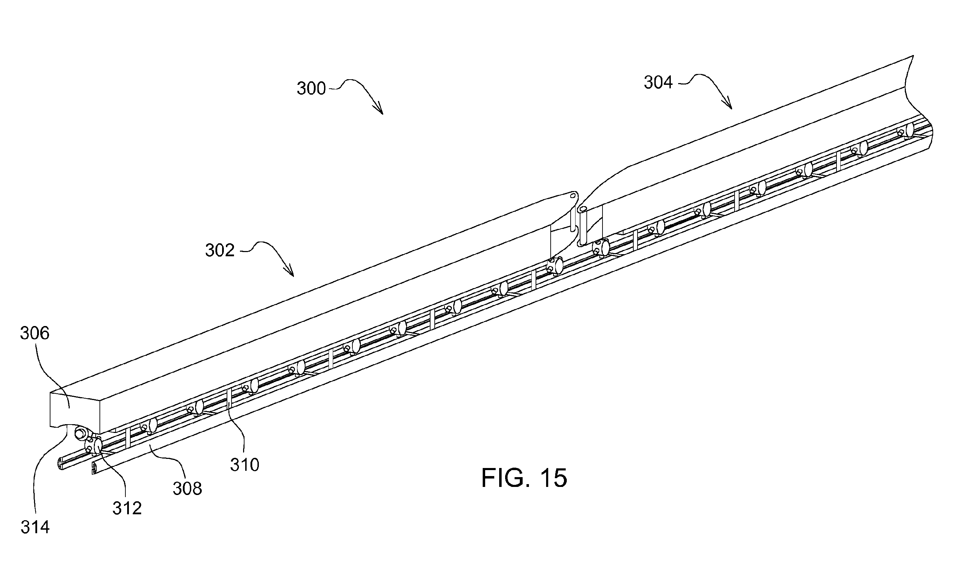

Figures 15 - 17 depict example geometries where the spray nozzles 312 and fluid plumbing are attached underneath a tubular boom 320, an arrangement that helps to maintain a compact, folded tubular boom package. For tubular booms 320 that have a rectangular or circular cross section, the irregular shape of the spray nozzles 312 external to the boom 320 may disturb the sleek geometry of the boom 320. The protruding nozzles 312 are large enough to increase the apparent width or cross sectional area of the boom 320 in an irregular way, and the storage or packaging would take up more space as a result. In one embodiment, the irregular features of the nozzles 312 are effectively made uniform by a skirt rack 308 that runs parallel to and is attached to the underside of each of the boom sections. When viewed in cross section, there are two skirt racks 308, each angled 30 to 45 degrees from the vertical line (e.g. fig. 25 of the Provisional Application Ser. No. 62/035536). The fluid distribution pipes and spray nozzles 312 are located along the length of the boom sections and between the skirt racks 308, which also serve to protect the nozzles 312. For further protection, the nozzles can be mounted or cocooned underneath a hollowed area or an indentation 314 below the boom section as shown in Fig. 17. The top of each skirt rack is riveted or attached to the boom 320's underside by connectors and adhesive. The bottom of each skirt rack extends past the nozzles in order to protect the nozzles if the boom 320 accidentally hits the ground or other obstacle. The skirt rack 308 also helps to define a neat final packaging for the boom sections; in addition, as the boom 320 folds, the boom sections may sway a little and hit or skim past each other if the boom sections are light weight, but the skirt rack 308 would protect the nozzles 312 from damage. If the boom 320 is lightweight, the skirt rack 308 is also made of lightweight material such as aluminum or composite fiber.

In the embodiment of the skirt racks, as shown in Figs. 15 - 17, the underside of the boom sections has two skids 308 that run the length of boom section. The skids are connected to the underside of the boom sections by cross tubes or by struts 309. The underside connection location and angle of the cross tube or struts 309 relative to the bottom surface the boom sections determines how far outwardly extended the skids are with respect to the diameter or width of the boom sections. In the example of Fig. 15, the struts 309 are substantially perpendicular (e.g. 85 - 95 degrees) to the undersurface of the boom 320 so that the spacing distance between the two skids (skirt racks) 308 are less than the width of the boom sections. The skids 308 are still spaced farther apart than the size of a spray nozzle 312 so that the nozzles 312 are protected if the boom 320 encounters an obstacle. In yet another embodiment, the skids, struts, fluid distribution pipes and nozzles are mounted on the rear or front side of boom 320. That is, the boom 320 and skids 308 as depicted in Fig. 17 are effectively rotated around the boom's long center axis by about 90 degrees.

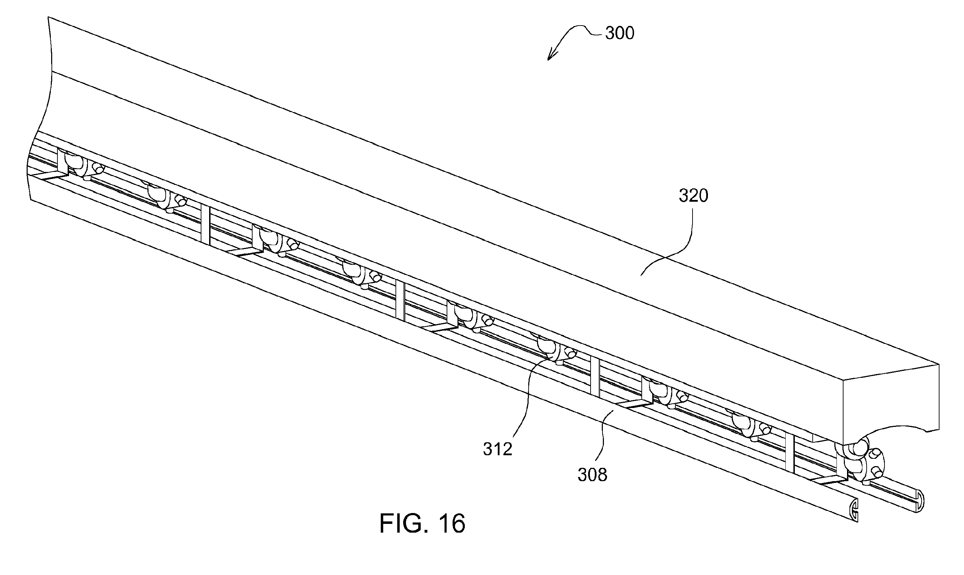

The aforementioned example boom folding and unfolding methods are applicable to different types of boom geometries (e.g. Figs. 1 - 3) although the final storage position dimensions may differ depending on the cross sectional area of the boom 30. By using a slim, single tubular geometry for the boom sections as shown in Figs. 3A and 3B, the folding process results in a very narrow width sprayer for transport or storage. But the same folding process can also be advantageously generalized to booms with larger cross sections to obtain a more narrow width sprayer during transport or storage. For instance, Fig. 2 depicts an example boom 30 with trusses. When viewed from a cross section or on an end, the inner wing 10 of boom 30 in Fig. 2 is triangular in geometry for improved rigidity in three dimensions. The triangle is for example an isosceles triangle with each side being 2 - 4 feet. To accommodate the triangular cross section of the truss boom 30, the aforementioned fold methods may have the outer wings and breakaway wing stacked at an angle relative to rather than over the top of the inner wing (e.g. Fig. 16 of the Provisional Application Ser. No. 62/035536). The final cross section geometry of the boom sections stacked over each other includes that of a parallelogram, with the apex of the two triangles pointed in approximately opposite directions. For instance, the apex of the triangular cross section of the inner wing is pointed mostly towards the sky and the apex of the triangular cross section of the breakaway wing or outer wing is pointed mostly towards the ground. Alternatively, the cross section geometry is diamond-shaped; the boom sections (with triangular cross sections) rest on top of or stacked over each other, but the apex of the two triangles point in approximately opposite directions. In yet another embodiment where composite material or fiber boom sections have a triangular profile, the breakaway wing is folded forward or rearward first, then the outer wing is folded at, for example, a 40 - 50 degree angle (the joint hinge is angled) so that the breakaway wing is stacked above the outer wing.

Returning to the tubular boom geometry, Fig. 3A depicts an example suspension span boom 30 that primarily includes three tubular sections 6, 8, 10, with the tube section 10 (inner wing) having the largest diameter, nearest to the center frame 20. A light weight tubular boom weighs about one-tenth to a quarter the weight of a steel boom, where 100 feet steel booms with trusses weigh about 5000 pounds. The center frame 20 is attached to a rear of the vehicle 24 or spray tank platform. In some embodiments, the suspension span boom 30's wing segments are made of composite material (e.g. carbon fiber and other fiber, plastics, polymers and so on). In Fig. 3A, the outer wing 8 and breakaway wing 6 are both short and approximately comparable in length. In Fig. 3A, the inner wing 10 is attached to and supported by the spray boom 30 and a mount assembly vertical joint member, located behind the chemical tank and adjacent to the center frame 20, and also by the inner boom support shaft and the sprayer boom 30 mounting assembly. Additional support for the inner 10 and outer 8 wings is supplied by the boom support cables for passive suspension. The support cables are attached at their outer ends to the innermost lower corner of the outer wing and at their inner ends to the two upper portions of the cable lift/support Y-members that are in turn pivotally attached to the upper end of the inner support shaft. However in Fig. 3B, there are only two boom sections and the outer wing 52 is shorter than the breakaway wing 54. The boom 30 in Fig. 3B folds twice horizontally by using mechanisms such the joint regions 110 or 160 depicted in Figs. 11, 11 A and 11 B.

The disclosed example overhead folding methods usually put less strain on the boom components and induce less torsional loads on the system than the more-prevalent horizontal fold systems. Less torsional loading allows for lighter weight boom structures so that the sprayer vehicle 24 causes less soil compaction. Overhead folding along with a small cross-sectional area of the boom also allow for narrower-width boom packaging, especially when the components are stacked on top of one another as opposed to side by side. Although this disclosure focuses on macroscopic and large sprayers and booms such as those used in an outdoor agricultural field, small sprayers and booms for industrial manufacturing or even microelectro-mechanical (MEMs) sized sprayers also benefit from these ideas. That is, the booms may be mounted ahead of a tractor or towed by a tractor, or may be mounted on a dolly or platform or in a robotic housing, and so on, for industrial purposes.

After much modeling and testing, example suitable boom lengths include booms with three articulated sections where the inner wing is 9.85 meters (m), outer wing or middle wing is 3.4 m, and the breakaway or outermost wing is 3.65 m. Another configuration where the boom has four articulated boom sections includes an inner wing of 9.85 m, outer wing or middle wing of 3.4 m, second outer wing of 1.95 m and the breakaway or outermost wing of 3.65 m. Another configuration is inner wing is 9.85 m, outer wing or middle wing is 3.4 m, second outer wing is 4.5 m and the breakaway or outermost wing is 3.65 m. Yet another configuration is inner wing is 7.9 m, outer wing or middle wing is 3.4 m, second outer wing is 1.95 m and the breakaway or outermost wing is 3.65 m.

These different boom length dimensions serve different countries.

Finally, the orientation and directions stated and illustrated in this disclosure should not be taken as limiting. Many of the orientations stated in this disclosure and claims are with reference to the direction of travel of the equipment (e.g. rearward is opposite the direction of travel). But, the directions, e.g. "behind" are merely illustrative and do not orient the embodiments absolutely in space. That is, a structure manufactured on its "side" or "bottom" is merely an arbitrary orientation in space that has no absolute direction. Also, in actual usage, for example, the boom equipment may be operated or positioned at an angle because the implements may move in many directions on a hill; and then, "top" is pointing to the "side." Thus, the stated directions in this application may be arbitrary designations. Also vertical height or horizontal length restrictions other than the ISO standard may exist, and the boom section lengths may be revised accordingly but still follow the principles outlined in this disclosure.

In the present disclosure, the descriptions and example embodiments should not be viewed as limiting. Rather, there are variations and modifications that may be made without departing from the scope of the appended claims.

## Claims

1. An articulated spray boom (30) comprising:
an inner wing (10, 210), middle wing (8, 208) and outermost wing (6, 206);
wherein a first end of the inner wing (10, 210) is horizontal-pivotally coupleable to a vehicle (22, 24), a second end of the inner wing (10, 210) is overhead vertical-pivotally coupled to a first end of the middle wing (8, 208), and a second end of the middle wing (8, 208) is horizontal-pivotally coupled to a first end of the outermost wing (6, 206);
wherein in a spray position, the inner wing (10), middle wing (8) and outermost wing (6, 206) extend substantially horizontally in alignment, extending out from the vehicle body;
wherein in a transport position, the inner wing (10, 210), middle wing (8, 208) and outermost wing (6, 206) are foldably-collapsed with each said wing (10, 210, 8, 208, 6, 206) substantially horizontally parallel to a surface of the vehicle body; and wherein the middle wing (8, 208) and outermost wing (6, 206) extend aligned above or below the inner wing (10, 210); and
a length of the middle wing (8, 208) is less than a regulated standard vertical height restriction; wherein vertical points towards a sky.

2. The articulated spray (30) boom of claim 1, wherein the outermost wing (6, 206) pivots by a maximum angle horizontally rearward or forward towards the middle wing (8, 208) in a transition from the field position to the transport position.

3. The articulated spray boom (30) of claim 1 or 2, wherein at least two of the said wings (10, 210, 8, 208, 6, 206) includes composite fiber material.

4. The articulated spray boom (30) of one of the claims 1 to 3, wherein each of the two said wings (10, 210, 8, 208, 6, 206) comprises a single tubular beam.

5. The articulated spray boom (30) of one of the claims 1 to 4, wherein the second end of the inner wing (10, 210) is coupled to the first end of the middle wing (8, 208) by a motorized hinge joint (212).

6. The articulated spray boom (30) of one of the claims 1 to 5, further comprising a motorized hinge joint between the inner wing (10, 210) and a center frame of the vehicle body, wherein the hinge joint provides a rotation about a long central axis of said wings (10, 210, 8, 208, 6, 206).

7. The articulated spray boom of one of the claims 1 to 6, wherein the outermost wing includes two articulated boom wing sections (6, 6').

8. Agricultural sprayer comprising a spray boom (30) according to one or more of the claims 1 to 6.

9. A method (50) of folding an articulated spray boom (30), the method comprising:
(52) transitioning said boom (30) from a spray position to a transport position,
wherein said boom (30) is mountable on a vehicle (22, 24);
(54) pivoting an outermost wing (6, 206) of said boom (30), along an horizontal plane in a forward or rearward direction from an extended position of said boom (30), wherein said boom (30) has an inner wing (10, 210), a middle wing (8, 208) and an outermost wing (6, 206);
(56) pivoting overhead, the middle wing (8, 208) above the inner wing (10, 210) until the middle wing (8, 208) rests above the inner wing (10, 210);
(58) straightening out the outermost wing (6, 206) to the spray position until it aligns with the inner wing (10, 210) and with the middle wing (8, 208), and the outermost wing (6, 206) rests above the inner wing (10, 210); and
(60) pivoting in a horizontal plane, the inner wing (10, 210) towards a body of the vehicle (22, 24), wherein horizontal is substantially parallel to a ground or field.

10. The method (50) of claim 9, wherein (54) pivoting horizontally the outermost wing (6, 206) and (56) pivoting overhead the middle wing (8, 208) occur substantially together and physically independently.

11. The method (50) of claim 9 or 10, wherein (56) pivoting overhead the middle wing (8, 208) occurs while the outermost wing (6, 206) is pivoting horizontally forward or rearward.

12. The method (50) of one of the claims 9 to 11, wherein (58) straightening out the outermost wing (6, 206) occurs while the middle wing (8, 208) is pivoting overhead.

13. The method (50) of one of the claims 9 to 12, wherein (60) pivoting the inner wing (10, 210) towards the vehicle (22, 24) occurs while the outermost wing (6, 206) is straightening out and/or while the middle wing (8, 208) is pivoting overhead.

14. The method (50) of one of the claims 9 to 14, further comprises sensing a wing's position; and automatically concurrently performing folding stages (52, 54, 56, 58, 60) based on sensed position.
